# EUROPÄISCHE PATENTANMELDUNG

(11) **EP 2 330 756 A1**
(43) Veröffentlichungstag der Anmeldung: **08.06.2011**
(21) Anmeldenummer: 09177973.6
(22) Anmeldetag: 04.12.2009
(51) Int. Cl.: H04B 10/10, H04B 10/155

(54) **Vorrichtung zur Datenübertragung über Leuchtmittel**

(71) Anmelder: Hella KGaA Hueck & Co., 59552 Lippstadt (DE)
(72) Erfinder: Decius, Nikolaus, 59558, Lippstadt (DE)

(57) **Zusammenfassung**

Die Erfindung betrifft eine Vorrichtung zur Datenübertragung mit mindestens einem Leuchtmittel, das eine elektrische Energieversorgung aufweist, die mit einer Steuereinheit gekoppelt ist, wobei durch die Steuereinheit ein Lichtstrom des Leuchtmittels über eine mit Periodenintervallen aufweisenden Pulsweitenmodulation steuerbar ist, wodurch innerhalb der Periodenintervalle jeweils ein Lichtimpuls zeitlich angeordnet ist.

Erfindungsgemäß ist vorgesehen, dass jeder Lichtimpuls durch die Steuereinheit innerhalb jedes Periodenintervalls zeitlich verschiebbar ist, wodurch ein auslesbarer digitaler Datencode erzeugbar ist.

## Beschreibung

Die Erfindung betrifft eine Vorrichtung zur Datenübertragung mit mindestens einem Leuchtmittel, das eine elektrische Energieversorgung aufweist, die mit einer Steuereinheit gekoppelt ist, wobei durch die Steuereinheit ein Lichtstrom des Leuchtmittels über eine Periodenintervallen aufweisenden Pulsweitenmodulation steuerbar ist, wodurch innerhalb der Periodenintervalle jeweils ein Lichtimpuls zeitlich angeordnet ist. Weiterhin betrifft die Erfindung ein Verfahren zur Datenübertragung mit mindestens einem Leuchtmittel, das eine elektrische Energieversorgung aufweist, die mit einer Steuereinheit gekoppelt ist, wodurch die Steuereinheit ein Lichtstrom des Leuchtmittels über eine mit Periodenintervallen aufweisenden Pulsweitenmodulation gesteuert wird, wodurch innerhalb der Periodenintervalle jeweils ein Lichtimpuls zeitlich angeordnet ist.

### Stand der Technik

Aus der Druckschrift EP 0 898 684 B1 ist bekannt, dass Leuchtmittel energetisch mit einer Pulsweitenmodulationsvorrichtung betrieben werden. Dabei kommen Halbleiterelemente als Leuchtmittel zum Einsatz, die sich durch eine erhöhte Nutzungsdauer gegenüber herkömmlichen Leuchtmiftein, wie z. B. Glüh- oder Wolfram Halogenlampen auszeichnen. Um die Betriebssicherheit der Leuchtmittel zu gewährleisten, müssen diese vor Ende der Lebensdauer gewechselt werden. Dazu werden Betriebszustandsdaten des Leuchtmittels durch eine Vorrichtung erfasst, die zur Bestimmung der verbleibenden Lebensdauer genutzt werden. Allerdings ist ein hoher technischer Aufwand nötig, um die Betriebszustandsdaten des Leuchtmittels zu übertragen.

### Offenbarung der Erfindung

Es ist Aufgabe der vorliegenden Erfindung, eine Vorrichtung und Verfahren zur Datenübertragung mit mindestens einem Leuchtmittel bereitzustellen, wobei die Vorrichtung und das Verfahren technisch einfach und zuverlässig aufgebaut sind, um eine schnelle und einfache Übertragung von Daten der Vorrichtung und/oder des Leuchtmittels zu ermöglichen.

Zur Lösung dieser Aufgabe wird eine Vorrichtung mit den Merkmalen des Anspruches 1 sowie ein Verfahren mit den Merkmalen des Anspruches 12 vorgeschlagen, insbesondere mit den Merkmalen des jeweiligen kennzeichnenden Teils. In den abhängigen Ansprüchen sind bevorzugte Weiterbildungen ausgeführt.

Erfindungsgemäß ist vorgesehen, dass jeder Lichtimpuls durch die Steuereinheit innerhalb jedes Periodenintervalls zeitlich verschiebbar ist, wodurch ein auslesbarer digitaler Datencode erzeugbar ist.

Der Kern der Erfindung besteht darin, dass es mit der Vorrichtung möglich ist, Daten über den Lichtstrom zu senden. Durch die zeitliche Verschiebung des Lichtimpulses wird eine einfache Möglichkeit geschaffen, eine dadurch bedingte Signalwechselverschiebung des Lichtimpulses von Low auf High in dem Periodenintervall durch eine externe Auslesevorrichtung zu erfassen. Da ein Pulsweitenmoduliertes Signal innerhalb einer Periode immer einen Puls und eine Pause enthält, kann mit einem Puls am Periodenanfang ein logischer Zustand, z.B. eine logische Null, und mit einem Puls am Periodenende ein anderer logischer Zustand, z.B. eine logische Eins, codiert werden. Es besteht somit die Möglichkeit z.B. Betriebszustandsdaten der Vorrichtung und/oder des Leuchtmittels über den Lichtstrom zu übermitteln. Damit kann die Vorrichtung und/oder das Leuchtmittel durch eine externe, insbesondere mobile photoempfindliche Auslesevorrichtung 66, die den Datencode auslesen kann, überwacht werden. Ferner liegt ein weiterer besonderer Vorteil in dieser Erfindung, dass eine permanente Übertragung von Daten erfolgen kann, ohne dass die Lichtintensität des Lichtstromes davon beeinflusst wird. Zudem ist eine elektrische Verbindung zur Vorrichtung zum Auslesen der Daten nicht erforderlich.

Besonders vorteilhaft ist, dass das Leuchtmittel ein lichtabstrahlendes Halbleiterbauelement, insbesondere eine LED (Light Emitting Diode) oder eine OLED (Organic Light Emitting Diode) oder ein lichtabstrahlendes Polymer oder dergleichen ist. Dabei zeichnen sich lichtabstrahlende Halbleiterelemente durch ihre erhöhte Lebensdauer gegenüber herkömmlichen Leuchtmitteln, wie z. B. Glühlampen, welche Temperaturstrahler sind, aus. Zudem emittieren sie Licht in einem begrenzten Spektralbereich, so dass dieses nahezu monochrom ist. Dabei erreichen zum Beispiel LEDs eine Lichtausbeute bis zu 160 Lumen pro Watt. Der Wirkungsgrad eines lichtabstrahlenden Halbleiterelementes ist dabei um ein Vielfaches höher als der einer klassischen Glühlampe. Besonders vorteilhaft ist bei lichtabstrahlenden Halbleiterbauelementen gegenüber herkömmlichen Leuchtmitteln, wie z.B. Glühlampen, dass sich Halbleiterbauelemente sehr schnell ein- und ausschalten lassen, womit eine hohe Datenübertragungsgeschwindigkeit mit Hilfe der emittierten Lichtimpulse ermöglicht wird.

Weiterhin ist es vorteilhaft, dass das Periodenintervall in einem Einschaltintervall, in dem ein starker Lichtimpuls liegt, und einem Ausschaltintervall, in dem kein oder ein schwacher Lichtimpuls liegt, unterteilt ist, wobei das Einschaltintervall und das Ausschaltintervall durch die Steuereinheit verschiebbar oder vertauschbar sind. Eine Regel zur Codierung kann dabei sein, dass ein low-high-Signalwechsel am Anfang eines Periodenintervalls als logische Eins codiert ist und ein high-low-Signalwechsel am Ende eines Periodenintervalls als logische Null codiert ist. Dabei weist jeder Impuls in der Realität eine Anstiegszeit, eine Impulsdauer und eine Abfallzeit auf. Demnach ist jeder Impuls durch drei charakteristische Merkmale gekennzeichnet. Das erste Merkmal ist die Vorderflanke, die sich im Bereich der Anstiegszeit ergibt. Das zweite Merkmal ist das so genannte Dach des Impulses, das sich im Bereich der Impulsdauer ergibt. Das dritte Merkmal ist die so genannte Rückflanke, die sich im Bereich der Abfallzeit des Impulses ergibt. Dabei wird die Anstiegszeit nach DIN IEC 469 auch Erstübergangsdauer genannt und die Abfallzeit auch Letztübergangsdauer. Aufgrund dieser Übergänge ist es vorteilhaft, für eine sichere Bestimmung eines Signalwechsels von Low auf High am Anfang des Periodenintervalls, den gesamten Bereich der Anstiegszeit des Impulses zu analysieren und zur Bestimmung des Signalwechsels von High auf Low den gesamten Bereich der Abfallzeit des Impulses zu analysieren. Damit können Auslesefehler des digitalen Datencodes wirksam minimiert werden.

Weiterhin hat es sich als vorteilhaft erwiesen, dass mehrere Leuchtmittel zu einem Cluster angeordnet sind. Dadurch kann gewährleistet werden, dass bei Ausfall eines Leuchtmittels in dem Cluster dennoch der digitale Datencode auslesbar ist. Zudem kann die Steuereinheit den Ausfall des entsprechenden Leuchtmittels registrieren und diese Information durch den auslesbaren digitalen Datencode durch die anderen noch funktionierenden Leuchtmittel übertragen, so dass entsprechende Maßnahmen zum Austausch des defekten Leuchtmittels getroffen werden können. Ferner kann der Zusammenschluss mehrerer Leuchtmittel dazu beitragen, dass die Leuchtintensität der Gesamtanordnung der Leuchtmittel bei Ausfall eines Leuchtmittels nicht wesentlich verringert wird.

Besonders vorteilhaft ist, dass das emittierende Licht des Leuchtmittels durch eine Spiegelanordnung oder einen Lichtwellenleiter oder durch eine Linse oder dergleichen bündelbar ist. Dadurch kann die Dichte des Lichtstromes erhöht werden. Zudem ist eine zielgerichtete Lichteinwirkung möglich. Bei einer Nutzung eines Lichtwellenleiters kann der Lichtstrom zudem über weite Strecken transportiert werden. Dies kann eine dezentrale Anordnung des Leuchtmittels erleichtern. Auch ist es denkbar, dass das emittierende Licht durch eine Linse gebündelt wird.

Zudem ist vorteilhaft, dass mindestens ein Sensor mit der Steuereinheit verbunden ist, wobei mindestens ein Betriebsparameter des Leuchtmittels und/oder der Vorrichtung erfassbar ist, wobei der Betriebsparameter durch den digitalen Datencode übertragbar ist. Der Sensor kann dabei ein Spannungsmesser, ein Strommesser, ein Zeitmesser und/oder auch ein Temperaturfühler sein. Diese ermittelten Werte können zu einer Abschätzung der verbleibenden Lebensdauer des Leuchtmittels herangezogen werden. Aber auch Energieverbrauchswerte, Kenngrößen und technische Daten zur Identifizierung können über den digitalen Datencode des Leuchtmittels übermittelt werden. Besonders vorteilhaft ist dabei, dass der gemittelte und für das menschliche Auge gleichmäßig empfundene Lichtstrom durch die Datenübertragung eines digitalen Datencodes nicht beeinflusst wird. Je höher man die Frequenz der Pulsweitenmodulation wählt, desto mehr digitale Daten lassen sich über den Lichtstrom des Leuchtmittels pro Zeiteinheit übertragen. Üblicherweise wählt man z. B. für LEDs eine Frequenz von mehr als 100 Hz, was vom menschliche Auge als konstanter Lichtstrom empfunden wird. Bei schneller Vorbeifahrt an einem Leuchtmittel, welches mit geringer Impulsfrequenz, wie z.B. 100 Hz betrieben wird, kann es jedoch zu dem bekannten "Perlschnureffekt" kommen, bei dem das menschliche Auge ein Flackern des Leuchtmittels wahrnimmt. Deshalb werden Impulsfrequenzen zwischen 400 Hz und 1 KHz empfohlen. Mit zunehmenden Frequenzen tritt jedoch ein anderes Problem auf, nämlich die zunehmende Verlustleistung in der Steuereinheit, weil die Impulsflanken sind nicht beliebig steil sein können und bei zunehmenden Frequenzen auch zunehmend viele dieser Flanken pro Zeiteinheit auftreten. Hohe Verlustleistung verringert den Gesamtwirkungsgrad, erfordert zusätzliche Kühlmaßnahmen und damit unnötige Kosten. Andererseits sind beliebig steile Impulsflanken auch nicht erwünscht, weil die Abstrahlung elektromagnetischer Felder dadurch zunimmt. Auch ist die Benutzung einer normalen Glühlampe möglich, wobei allerdings in diesem Fall die Pulsfrequenz wesentlich niedriger angesetzt werden muss, da Trägheitseffekte zu berücksichtigen sind.

Zudem ist es denkbar, dass der Betriebsparameter und/oder eine weitergehende Berechnung aus den Betriebsparametern über eine Kommunikationsverbindung an eine erste Rechnereinheit übertragbar ist.

Mit den Betriebsparametern sind Analysen und Berechnungen möglich, die den Betriebszustand der Vorrichtung und des Leuchtmittels widerspiegeln. Ebenfalls ist es denkbar, dass eine weitergehende Berechnung aus den Betriebsparametern in einer Prognose über die verbleibende Restlebensdauer des Leuchtmittels und/oder der Vorrichtung durch eine Rechnereinheit erfolgen kann. Zudem ist es denkbar, dass die Kommunikationsverbindung bidirektional ausgerichtet ist, so dass von der vorzugsweise mobilen photoempfindlichen Auslesevorrichtung auch Daten an die Steuereinheit gesendet werden können. Es könnte dadurch eine Regulierung des Lichtstromes und/oder des Tastverhältnisses der Pulsweitenmodulation und/oder einfache Steuerbefehle wie Ein- und Ausschalten des Leuchtmittels über die Kommunikationsverbindung übermittelt werden.

Dabei ist besonders vorteilhaft, dass die Kommunikationsverbindung wenigstens eine der folgenden Technologien verwendet: Kabel, Twisted-Pair-Kabel, UTP-Kabel, FTP-Kabel, ITP-Kabel, Kabel mit WARP-Technologie, insbesondere Kabel in einer der Kategorien 1, 2, 3, 4, 5, 6, 7 oder 7a, Power-LAN, Bluetooth, Infrared Data Association (IrDA), ZigBee, Near Field Communication (NFC), Wireless Local Area Network (WLAN), WiMAX, einem Standard der IEEE 802, Wibree, FireWire, USB, Wireless USB, induktive Datenübertragung, kapazitive Datenübertragung, GSM, GPRS, UMTS, HSCSD oder HSDPA. Damit können drahtlose und/oder drahtgebundene Lösungen entstehen. Bei den drahtgebundenen Lösungen kann ein Datenkabel mit einer Abschirmung zur Geltung kommen, so dass elektromagnetische Störeinflüsse von außen weitestgehend abgeschirmt werden können. Zudem bietet die kabelgebundene Lösung den Vorteil, dass hierüber auch die angeschlossene Vorrichtung mit Energie versorgt werden kann. Dies kann ebenfalls parallel zu der eigentlichen elektrischen Energieversorgung erfolgen und ermöglicht eine erhöhte Ausfallsicherheit des Leuchtmittels, welche bei einem Einsatz z.B. in Unterflurbeleuchtungen für Flughäfen von besonderem Interesse sein kann. Bei den drahtlosen Technologien ist es besonders vorteilhaft, dass der sonst benötigte Verdrahtungsaufwand, wie dieser bei den drahtgebundenen Systemen existiert, entfällt. Zudem können Technologien herangezogen werden, die über einen großen Sende-/Empfangsradius verfügen. Als Beispiel sei hier der Standard GSM herangezogen, der es ermöglicht, zwischen einem Sender und einem Empfänger in einem Abstand von bis zu 35 km Daten auszutauschen. Eine Auswertung der drahtlos übermittelten Daten kann damit standortunabhängig vorgenommen werden.

Zudem ist vorteilhaft, dass in der Vorrichtung Informationen gespeichert sind, die durch das Leuchtmittel über den digitalen Datencode übertragbar sind, wobei mittels der Informationen eine eindeutige Identifizierung der Vorrichtung ermöglicht wird. Zur Identifizierung der Vorrichtung können Informationen über das Herstelldatum, der Seriennummer, der Hersteller der Vorrichtung und/oder dergleichen herangezogen werden. Zudem ist es denkbar, dass Informationen über ein Betriebsverhalten des Leuchtmittels und/oder der Vorrichtung zusammen mit den Informationen zur Identifikation der Vorrichtung übermittelt werden. Dadurch können Aussagen und/oder Prognosen über jede einzelne Vorrichtung getroffen werden, auch wenn mehrere Vorrichtungen zum Einsatz kommen. Weiterhin ist es denkbar, dass diese Informationen über einen längeren Zeitraum gesammelt und gespeichert werden, so dass anhand dieser Informationen eine Weiterentwicklung der Vorrichtung erleichtert werden kann.

Die erfindungsgemäße Aufgabe wird ebenfalls gelöst durch ein Verfahren zur Datenübertragung mit mindestens einem Leuchtmittel, das eine elektrische Energieversorgung aufweist, die mit einer Steuereinheit gekoppelt ist, wobei durch die Steuereinheit ein Lichtstrom des Leuchtmittels über eine mit Periodenintervallen aufweisenden Pulsweitenmodulation gesteuert wird, wodurch innerhalb der Periodenintervalle jeweils ein Lichtimpuls zeitlich angeordnet ist. Dazu ist erfindungsgemäß vorgesehen, dass bestimmte Lichtimpulse durch die Steuereinheit innerhalb des betreffenden Periodenintervalls zeitlich verschoben angeordnet sind, wodurch ein auslesbarer digitaler Datencode erzeugt wird.

Besonders vorteilhaft ist, dass von einem Sensor, der mit der Steuereinheit verbunden ist, mindestens ein Betriebsparameter, insbesondere ein Stromwert, Spannungswert, Betriebszeitwert, Temperaturwert und/oder dergleichen der Vorrichtung und/oder des Leuchtmittels erfasst wird. Diese Werterfassungen können zur Berechnung der Leistungsaufnahme des Leuchtmittels herangezogen werden. Dabei ist es denkbar, dass die Steuereinheit über einen Speicher verfügt, der in Intervallen z. B. minutenweise die Werte speichert, die später zur Aufarbeitung einer Historie genutzt werden können. Diese gewonnenen Daten können dann zur Weiterverarbeitung über den Lichtstrom an eine vorzugsweise mobile photoempfindliche Auslesevorrichtung 66 übermittelt werden, so dass die weitere Auswertung dezentral von der Vorrichtung erfolgt.

Es ist vorteilhaft, dass die Steuereinheit eine zweite Rechnereinheit und ein Speicher aufweist, wobei gespeicherte Betriebsparameter zur Berechnung der verbleibenden Lebensdauer herangezogen werden. Der Speicher kann als nicht-flüchtiger und/oder flüchtiger Speicher ausgebildet sein. Dabei hat der nicht-flüchtige Speicher den Vorteil, dass durch eine Unterbrechung der Energiezufuhr die Daten auf diesen erhalten bleiben. Durch die Berechnung der verbleibenden Lebensdauer kann dynamisch der Zeitpunkt zum Austausch des Leuchtmittels bestimmt werden. Zudem kann damit wirkungsvoll die Betriebssicherheit, die z.B. bei einem Einsatz des Leuchtmittels in einer Unterflurbeleuchtung eines Flughafengeländes oder auch einer Straßenlaterne gewährleistet werden. Ferner kann einem unnötigen vorzeitigen Austausch des Leuchtmittels wirkungsvoll entgegengewirkt werden, da der genaue Zeitpunkt des Austausches auslesbar ist. Dadurch reduzieren sich die Kosten erheblich bei gleichbleibender gesicherter Funktionalität des Leuchtmittels. Somit kann eine effiziente Benutzung der Leuchtmittel geschaffen werden. Weiterhin kann dadurch eine zuverlässige Erstellung von Serviceplänen für die bevorstehenden Servicearbeiten an den Leuchtmittein ermöglicht werden. Ferner können damit auch Leuchtmittel überwacht werden, die ihren Einsatz in nicht sicherheitsrelevanten Umgebungen finden. Ebenfalls ist es denkbar, dass das Verfahren und die Vorrichtung für die Überwachung von Kraftfahrzeugleuchtmitteln genutzt wird, wobei der auslesbare digitale Datencode durch den Lichtstrom des Kraftfahrzeugleuchtmittels übertragen wird. Zudem ist es denkbar, dass parallel zu dem Kraftfahrzeugleuchtmittel ein LED-Leuchtmittel gekoppelt wird, wobei auf dem Lichtstrom der LED ebenfalls der digitale Datencode erzeugt wird, so dass eine redundante Datenübermittelung erfolgen kann. So ist es denkbar, dass im Zuge einer technischen Kontrolle die verbleibende Lebensdauer der Kraftfahrzeugleuchtmittel ebenfalls durch ein Auslesen eines und/oder beider Lichtströme ermittelt werden kann. Dies könnte als zusätzlicher Service in einer Kfz-Werkstatt angeboten werden. Ebenfalls ist es natürlich denkbar, dass im Handel Auslesegeräte angeboten werden, mit denen der Kraftfahrzeugfahrer selbstständig die restliche Lebensdauer des Leuchtmittels erfassen kann. Auf diese Art und Weise könnte wirkungsvoll die Anzahl der Kraftfahrzeuge mit defektem Abblendlicht verringert werden, da der Kraftfahrzeugfahrer nicht mehr bis zum Ausfall der Kraftfahrzeugleuchtmittel warten muss, um die Lebensdauer der Kraftfahrzeuglampe effizient auszunutzen, wodurch eine erhöhte Verkehrssicherheit sichergestellt werden kann.

Weiterhin ist denkbar, ein Codierverfahren auf Basis des erfindungsgemäßen Verfahrens zu standardisieren, um mit dem mobilen photoempfindlichen Auslesegerät auch den Zustand anderer elektrischer Vorrichtungen zu analysieren, sofern diese über ein Leuchtmittel verfügen und der Codierstandard in diesen Vorrichtungen zum Tragen kommt.

Es ist ebenfalls denkbar, dass das Verfahren und die Vorrichtung für die Überwachung von Signalleuchtmitteln auf Booten genutzt wird, deren Austausch insbesondere bei Montage auf hohen Masten sehr mühsam oder während der Fahrt nicht möglich ist und deshalb vorzugsweise vor Antritt der Reise vorzunehmen ist.

Weitere Maßnehmen und Vorteile der Erfindung ergeben sich aus den Ansprüchen, der nachfolgenden Beschreibung und den Zeichnungen. Ebenfalls gelten die offenbarten Merkmale aus dem erfindungsgemäßen Verfahren auch für die erfindungsgemäße Vorrichtung und umgekehrt. In den Zeichnungen ist die Erfindung in mehreren Ausführungsbeispielen dargestellt. Dabei können die in den Ansprüchen und in der Beschreibung erwähnten Merkmale jeweils einzeln für sich oder in beliebiger Kombination erfindungswesentlich sein. Es zeigen:
- Figur 1: eine schematische Ansicht eines Leuchtmittels mit einer Steuereinheit und einer Energieversorgung,
- Figur 2: ein Diagramm, in dem Impulse einer Pulsweitenmodulation dargestellt werden,
- Figur 3: eine schematische Ansicht von Leuchtmitteln, die zu einem Cluster angeordnet sind,
- Figur 4: ein Diagramm, in dem die Impulse zeitlich verschoben dargestellt werden und
- Figur 5: eine schematische Ansicht zur Verdeutlichung der erfindungsgemäßen Vorrichtung.

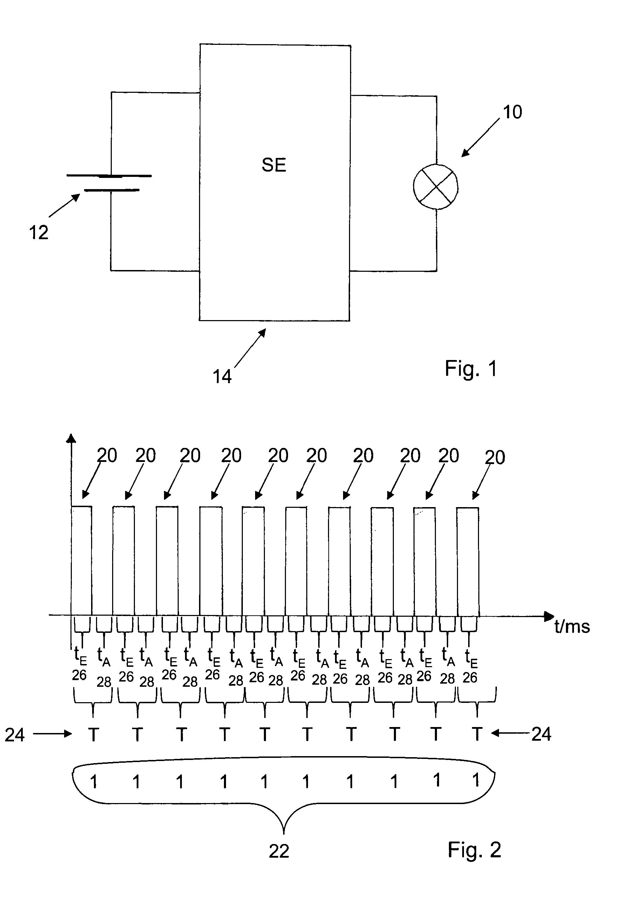

In Figur 1 ist schematisch ein Leuchtmittel 10, eine Steuereinheit 14 und eine Energieversorgung 12 dargestellt. Die Steuereinheit 14 ist dabei in der Lage das Leuchtmittel 10 mittels einer Pulsweitenmodulation energetisch zu versorgen. Dabei kann die Steuereinheit 14 das Tastverhältnis im Bereich von 0 und 100% steuern. Die Steuereinheit 14 kann dabei einen Mikrocontroller beinhalten, der direkt die Erzeugung eines Pulsweitenmodulationssignals unterstützt. Allerdings können auch geeignete Timerfunktionen und deren Implementierung zum Einsatz kommen.

In Figur 2 wird beispielhaft eine Anordnung von Impulsen 20 dargestellt, wie sie typischerweise bei einer Pulsweitenmodulation vorkommen. Dabei sind die Periodenintervalle 24 in einem Einschaltintervall 26 und einem Ausschaltintervall 28 unterteilt. Es wird beispielhaft ein Tastverhältnis von 50% dargestellt, da die Dauer des Einschaltintervalls 26 gleich der Dauer des Ausschaltintervalls 28 ist. Natürlich können auch andere Tastverhältnisse im Bereich von 0 bis 100%, die sich durch das Verhältnis von Einschaltintervall t_{E} 26 und dem Periodenintervall T 24 ergeben, eingestellt werden. Dabei erfolgt am Anfang eines Periodenintervalls ein Signalwechsel von Low auf High, was erfindungsgemäß mit einer binären Folge von Einsen 22 codiert wird. Bei einer normalen Pulsweitenmodulation würde sich damit eine endliche Folge von binären Einsen 22 ergeben.

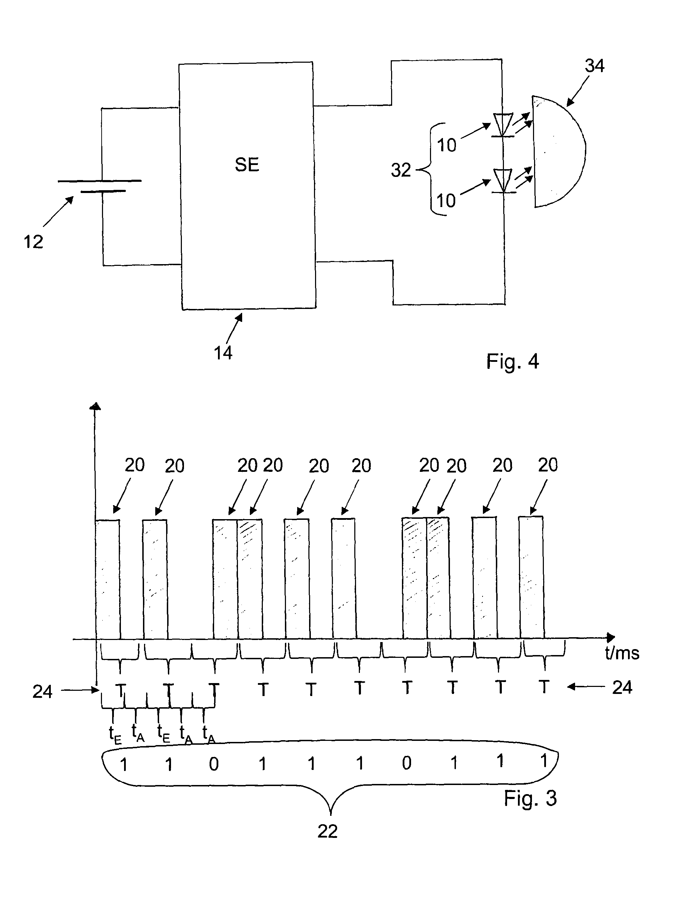

In Figur 3 werden Impulse 20 dargestellt, wobei bei einigen Impulsen 20 das Einschaltintervall t_{E} 26 und das Ausschaltintervall t_{A} 28 beispielhaft vertauscht sind. Hier erfolgt ein High-Low-Signalwechsel am Ende des Periodenintervalls T 24 des dritten Impulses 20, was als eine binäre Null codiert wird. Die nachfolgenden drei Impulse 20 ergeben wieder ein Low-High-Signalwechsel am Anfang des Periodenintervalls T 24, was wiederum als binäre Eins codiert ist. Der siebte Impuls 20 folgt dementsprechend wie der dritte Impuls einen High-Low-Signalwechsel am Anfang des Periodenintervalls T 24, so dass auch hier dieser Signalwechsel als binäre Null codiert ist, womit sich somit eine Binärfolge 22 ergibt.

In Figur 4 werden schematisch mehrere Leuchtmittel 10 als Cluster 32 dargestellt. Die Leuchtmittel 10 sind als LEDs ausgeführt. Eine Steuereinheit 14, die an eine Energieversorgung 12 gekoppelt ist, speist dabei die Leuchtmittel 10 über ein pulsweitenmoduliertes Signal. Der dadurch erzeugte Lichtstrom der Leuchtmittel 10 wird durch eine Linse 34 gebündelt, wodurch der emittierte Lichtstrom intensiviert werden kann. Dies ermöglicht es, dass der digitale Datencode auch in einem größeren Abstand zu der Linse 34 ausgelesen werden kann. Ebenso ist es vorstellbar, dass mehrere Leuchtmittel 10 parallel angeordnet sind, so dass bei Ausfall eines Leuchtmittels 10 ein fortlaufender Betrieb des Lichtstromes garantiert werden kann. Es sind schematisch zwei Leuchtmittel 10 zu einem Cluster 32 angeordnet, was natürlich auch für mehrere in Serie geschaltete Leuchtmittel 10, als auch für parallel Schaltungen von Leuchtmitteln 10 gilt. Dabei sind der Anordnung von Leuchtmitteln nahezu keine Grenzen gesetzt, wobei jedoch die maximale Belastbarkeit der Steuereinheit 14 in Verbindung mit der Energieversorgung 12 beachtet werden muss.

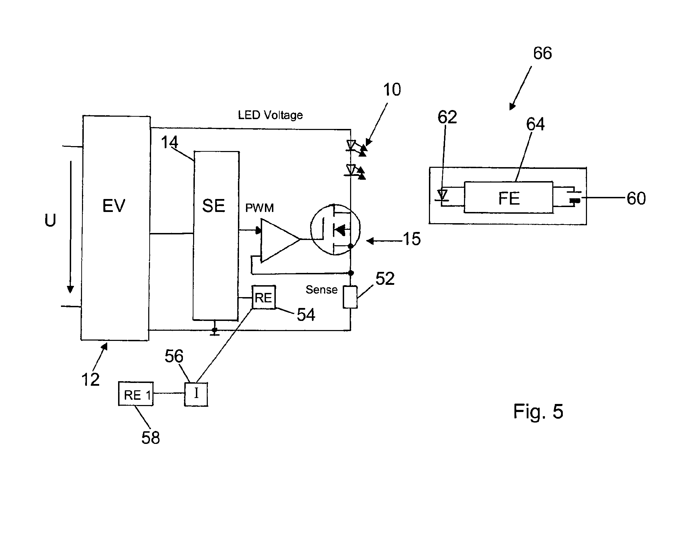

Die Figur 5 zeigt schematisch eine Vorrichtung des erfindungsgemäßen Verfahrens mit einer Energieversorgung 12 und einer Steuereinheit 14, wobei Leuchtmittel 10 durch ein pulsweitenmoduliertes Signal 15 versorgt werden. Das pulsweitenmodulierte Signal 15 wird dabei über einen Operationsverstärker und einem Transistor erzeugt, was zu einem emittierenden Lichtstrom der Leuchtmittel 10 führt. Ein Sensor 52, der in dem Stromkreis der Leuchtmittel 10 eingebracht ist, kann zur Strommessung eingesetzt werden. Allerdings ist natürlich auch ein Einsatz von Spannungsmesser, die parallel zu den Leuchtmitteln 10 angeordnet sind, als auch Temperaturmesser, die die Temperatur der einzelnen Leuchtmittel 10 oder der gesamten Vorrichtung erfassen können, denkbar. Die so gesammelten Daten des Sensors 52 werden von der Steuereinheit 14 an eine zweite Rechnereinheit 54 weitergeleitet. Diese Daten können zur Berechnung der verbleibenden Lebensdauer als auch der aktuellen Leistungsaufnahme der Leuchtmittel genutzt werden. Eine Übermittlung der Daten kann dann über den Lichtstrom und eine vorzugsweise mobile photoempfindliche Auslesevorrichtung 66 ausgelesen und darin gespeichert werden. Dies ermöglicht, dass Daten von mehreren Vorrichtungen von der Auslesevorrichtung 66 gesammelt werden können, was eine Beobachtung eines größeren Beleuchtungssystems erleichtert. Die Auslesevorrichtung 66, die eine Energieversorgung 60, eine Elektronikeinheit 64 und einen Empfänger 62 aufweist, empfängt den emittierten Lichtstrom der Leuchtmittel 10. Der Empfänger 62 ist dabei in der Lage die einzelnen Lichtimpulse der Elektronikeinheit 64 zuzuführen, die diese auf Low-High-Signalwechsel am Anfang des Periodenintervalls und High-Low-Signalwechsel am Ende des Periodenintervalls untersucht, um dadurch die digitalen Daten, die durch die Lichtimpulse in dem Lichtstrom der Leuchtmittel 10 übertragen werden, zu erfassen. Dabei kann die Elektronikeinheit 64 einen Speicher, einen Mikroprozessor und ein Display aufweisen. Der Mikroprozessor kann die digitalen codierten Daten in eine für den Menschen lesbare Form bringen, welche das Display anzeigen kann. Auch ist es denkbar, dass verschiedene Algorithmen in der Elektronikeinheit implementiert sind, die eine Analyse der Daten ermöglichen. Ebenfalls kann eine Übermittlung der Daten über eine Kommunikationsverbindung 56 an einen ersten Rechner 58 über Funk oder Kabel weitergeleitet werden. Der erste Rechner 58 ist damit dezentral betreibbar.

Weiterhin kann die Auslesevorrichtung eine Kommunikationsschnittstelle enthalten, über die die gesammelten Daten zur weiteren Auswertung in einen Zentralrechner eingespeist werden. Dabei ist besonders vorteilhaft, dass die Kommunikationsschnittstelle wenigstens eine der folgenden Technologien verwendet: Kabel, Twisted-Pair-Kabel, UTP-Kabel, FTP-Kabel, ITP-Kabel, Kabel mit WARP-Technologie, insbesondere Kabel in einer der Kategorien 1, 2, 3, 4, 5, 6, 7 oder 7a, Power-LAN, Bluetooth, Infrared Data Association (IrDA), ZigBee, Near Field Communication (NFC), Wireless Local Area Network (WLAN), WiMAX, einem Standard der IEEE 802, Wibree, FireWire, USB, Wireless USB, induktive Datenübertragung, kapazitive Datenübertragung, GSM, GPRS, UMTS, HSCSD oder HSDPA. Damit können drahtlose und/oder drahtgebundene Lösungen entstehen. Bei den drahtgebundenen Lösungen kann ein Datenkabel mit einer Abschirmung zur Geltung kommen, so dass elektromagnetische Störeinflüsse von außen weitestgehend abgeschirmt werden können. Zudem bietet die kabelgebundene Lösung den Vorteil, dass hierüber auch die angeschlossene Vorrichtung mit Energie versorgt werden kann. Bei den drahtlosen Technologien ist es besonders vorteilhaft, dass der sonst benötigte Verdrahtungsaufwand, wie dieser bei den drahtgebundenen Systemen existiert, entfällt. Zudem können Technologien herangezogen werden, die über einen großen Sende-/Empfangsradius verfügen. Als Beispiel sei hier der Standard GSM herangezogen, der es ermöglicht, zwischen einem Sender und einem Empfänger in einem Abstand von bis zu 35 km Daten auszutauschen. Eine Auswertung der drahtlos übermittelten Daten kann damit standortunabhängig vorgenommen werden.

### Bezugszeichenliste

- 10: Leuchtmittel
- 12: Energieversorgung
- 14: Steuereinheit
- 15: Pulsweitenmodulation
- 20: Impuls
- 22: binäre Folge
- 24: Periodenintervall
- 26: Einschaltintervall
- 28: Ausschaltintervall
- 32: Cluster
- 34: Linse
- 52: Sensor
- 54: zweite Rechnereinheit
- 56: Kommunikationsverbindung
- 58: erste Rechnereinheit
- 60: zweite Energieversorgung
- 62: Empfänger
- 64: Elektronikeinheit
- 66: Auslesevorrichtung

## Patentansprüche

1. Vorrichtung zur Datenübertragung mit mindestens einem Leuchtmittel (10), das eine elektrische Energieversorgung (12) aufweist, die mit einer Steuereinheit (14) gekoppelt ist, wobei durch die Steuereinheit (14) ein Lichtstrom des Leuchtmittels (10) über eine mit Periodenintervallen aufweisenden Pulsweitenmodulation (15) steuerbar ist, wodurch innerhalb der Periodenintervalle (24) jeweils ein Lichtimpuls (20) zeitlich angeordnet ist,
**dadurch gekennzeichnet, dass**
jeder Lichtimpuls (20) durch die Steuereinheit (14) innerhalb jedes Periodenintervalls (24) zeitlich verschiebbar ist, wodurch ein auslesbarer digitaler Datencode erzeugbar ist.

2. Vorrichtung nach Anspruch 1, **dadurch gekennzeichnet, dass** das Leuchtmittel (10) ein lichtabstrahlendes Halbleiterbauelement, insbesondere eine LED (Light Emitting Diode) (30) oder eine OLED (10) (Organic Light Emitting Diode) oder ein lichtabstrahlendes Polymer (10) oder dergleichen ist.

3. Vorrichtung nach Anspruch 1 oder 2,
**dadurch gekennzeichnet, dass**
das Periodenintervall (24) in einem Einschaltintervall (26), in dem ein starker Lichtimpuls (20) liegt, und einem Ausschaltintervall (28), in dem kein oder ein schwacher Lichtimpuls liegt, unterteilt ist, wobei das Einschaltintervall (26) und das Ausschaltintervall (28) durch die Steuereinheit (14) vertauschbar oder verschiebbar sind.

4. Vorrichtung nach einem der vorhergehenden Ansprüche,
**dadurch gekennzeichnet, dass** mehrere Leuchtmittel (10) zu einem Cluster (32) angeordnet sind.

5. Vorrichtung nach einem der vorhergehenden Ansprüche,
**dadurch gekennzeichnet, dass**
das emittierende Licht des Leuchtmittels (10) durch eine Spiegelanordnung (34) oder einen Lichtwellenleiter (34) oder durch eine Linse (34) oder dergleichen bündelbar ist.

6. Vorrichtung nach einem der vorhergehenden Ansprüche,
**dadurch gekennzeichnet, dass**
mindestens ein Sensor (52) mit der Steuereinheit (14) verbunden ist, wobei mindestens ein Betriebsparameter des Leuchtmittels (10) und/oder der Vorrichtung erfassbar ist, wobei der Betriebsparameter durch den digitalen Datencode übertragbar ist.

7. Vorrichtung nach Anspruch 6,
**dadurch gekennzeichnet, dass**
der Betriebsparameter und/oder eine weitergehende Berechnung aus den Betriebsparametern über eine Kommunikationsverbindung (56) an eine erste Rechnereinheit (58) übertragbar ist.

8. Vorrichtung nach Anspruch 7,
**dadurch gekennzeichnet, dass**
die Kommunikationsverbindung (56) wenigstens eine der folgenden Technologien verwendet: Kabel, Twisted-Pair-Kabel, UTP-Kabel, FTP-Kabel, ITP-Kabel, Kabel mit WARP-Technologie, insbesondere Kabel in einer der Kategorien 1, 2, 3, 4, 5, 6, 7 oder 7a, Power-LAN, Bluetooth, Infrared Data Association (IrDA), ZigBee, Near Field Communication (NFC), Wireless Local Area Network (WLAN), WiMAX, einem Standard der IEEE 802, Wibree, FireWire, USB, Wireless USB, induktive Datenübertragung, kapazitive Datenübertragung, GSM, GPRS, UMTS, HSCSD oder
HSDPA.

9. Vorrichtung nach einem der vorhergehenden Ansprüche,
**dadurch gekennzeichnet, dass**
in der Vorrichtung Informationen gespeichert sind, die durch das Leuchtmittel (10) über den digitalen Datencode übertragbar sind, wobei mittels der Informationen eine eindeutige Identifizierung der Vorrichtung ermöglicht wird.

10. Vorrichtung nach einem der vorhergehenden Ansprüche, die an einer Straßenbeleuchtungsvorrichtung oder einer Flughafenbeleuchtungsvorrichtung, insbesondere einer Unterflurbeleuchtung angeordnet ist.

11. Verfahren zur Datenübertragung mit mindestens einem Leuchtmittel (10), das eine elektrische Energieversorgung (12) aufweist, die mit einer Steuereinheit (14) gekoppelt ist, wobei durch die Steuereinheit (14) ein Lichtstrom des Leuchtmittels (10) über eine mit Periodenintervallen aufweisenden Pulsweitenmodulation (15) gesteuert wird, wodurch innerhalb der Periodenintervalle (24) jeweils ein Lichtimpuls (20) zeitlich angeordnet ist,
**dadurch gekennzeichnet, dass**
bestimmte Lichtimpuls (20) durch die Steuereinheit (14) innerhalb des betreffenden Periodenintervalls (24) zeitlich verschoben angeordnet sind, wodurch ein auslesbarer digitaler Datencode erzeugt wird.

12. Verfahren nach einem der vorhergehenden Ansprüche,
**dadurch gekennzeichnet, dass**
von einem Sensor (52), der mit der Steuereinheit (14) verbunden ist, mindestens ein Betriebsparameter, insbesondere ein Stromwert, Spannungswert, Temperaturwert, Betriebszeitwert und/oder dergleichen der Vorrichtung und/oder des Leuchtmittels erfasst wird.

13. Verfahren nach einem der vorhergehenden Ansprüche,
**dadurch gekennzeichnet, dass** die Steuereinheit (14) eine zweite Rechnereinheit (54) und eine Speichereinheit aufweist, wobei die Speichereinheit die Betriebsparameter speichern kann, die zur Berechnung der verbleibenden Lebensdauer herangezogen werden.

14. Verfahren nach einem der vorhergehenden Ansprüche, welches durch eine Vorrichtung gemäß einem der Ansprüche 1 bis 10 betrieben wird.

## Geänderte Patentansprüche

### Geänderte Patentansprüche gemäss Regel 137(2) EPÜ.

**1.** Vorrichtung zur Datenübertragung mit mindestens einem Leuchtmittel (10), das eine elektrische Energieversorgung (12) aufweist, die mit einer Steuereinheit (14) gekoppelt ist, wobei durch die Steuereinheit (14) ein Lichtstrom des Leuchtmittels (10) über eine mit Periodenintervallen aufweisenden Pulsweitenmodulation (15) steuerbar ist, wodurch innerhalb der Periodenintervalle (24) jeweils ein Lichtimpuls (20) zeitlich angeordnet ist, wobei
jeder Lichtimpuls (20) durch die Steuereinheit (14) innerhalb jedes Periodenintervalls (24) zeitlich verschiebbar ist, wodurch ein auslesbarer digitaler Datencode erzeugbar ist, **dadurch gekennzeichnet, dass**
das Periodenintervall (24) in einem Einschaltintervall (26), in dem ein starker Lichtimpuls (20) liegt, und einem Ausschaltintervall (28), in dem kein oder ein schwacher Lichtimpuls liegt, unterteilt ist, wobei das Einschaltintervall (26) und das Ausschaltintervall (28) durch die Steuereinheit (14) vertauschbar oder verschiebbar sind.

**2.** Vorrichtung nach Anspruch 1, **dadurch gekennzeichnet, dass**
das Leuchtmittel (10) ein lichtabstrahlendes Halbleiterbauelement, insbesondere eine LED (Light Emitting Diode) (30) oder eine OLED (10) (Organic Light Emitting Diode) oder ein lichtabstrahlendes Polymer (10) oder dergleichen ist.

**3.** Vorrichtung nach Anspruch 1 oder 2,
**dadurch gekennzeichnet, dass** mehrere Leuchtmittel (10) zu einem Cluster (32) angeordnet sind.

**4.** Vorrichtung nach einem der vorhergehenden Ansprüche,
**dadurch gekennzeichnet, dass**
das emittierende Licht des Leuchtmittels (10) durch eine Spiegelanordnung (34) oder einen Lichtwellenleiter (34) oder durch eine Linse (34) oder dergleichen bündelbar ist.

**5.** Vorrichtung nach einem der vorhergehenden Ansprüche,
**dadurch gekennzeichnet, dass**
mindestens ein Sensor (52) mit der Steuereinheit (14) verbunden ist, wobei mindestens ein Betriebsparameter des Leuchtmittels (10) und/oder der Vorrichtung erfassbar ist, wobei der Betriebsparameter durch den digitalen Datencode übertragbar ist.

**6.** Vorrichtung nach Anspruch 5 ,
**dadurch gekennzeichnet, dass**
der Betriebsparameter und/oder eine weitergehende Berechnung aus den Betriebsparametern über eine Kommunikationsverbindung (56) an eine erste Rechnereinheit (58) übertragbar ist.

**7.** Vorrichtung nach Anspruch 6 ,
**dadurch gekennzeichnet, dass**
die Kommunikationsverbindung (56) wenigstens eine der folgenden Technologien verwendet: Kabel, Twisted-Pair-Kabel, UTP-Kabel, FTP-Kabel, ITP-Kabel, Kabel mit WARP-Technologie, insbesondere Kabel in einer der Kategorien 1, 2, 3, 4, 5, 6, 7 oder 7a, Power-LAN, Bluetooth, Infrared Data Association (IrDA), ZigBee, Near Field Communication (NFC), Wireless Local Area Network (WLAN), WiMAX, einem Standard der IEEE 802, Wibree, FireWire, USB, Wireless USB, induktive Datenübertragung, kapazitive Datenübertragung, GSM, GPRS, UMTS, HSCSD oder HSDPA.

**8.** Vorrichtung nach einem der vorhergehenden Ansprüche,
**dadurch gekennzeichnet, dass**
in der Vorrichtung Informationen gespeichert sind, die durch das Leuchtmittel (10) über den digitalen Datencode übertragbar sind, wobei mittels der Informationen eine eindeutige Identifizierung der Vorrichtung ermöglicht wird.

**9.** Vorrichtung nach einem der vorhergehenden Ansprüche, die an einer Straßenbeleuchtungsvorrichtung oder einer Flughafenbeleuchtungsvorrichtung, insbesondere einer Unterflurbeleuchtung angeordnet ist.

**10.** Verfahren zur Datenübertragung mit mindestens einem Leuchtmittel (10), das eine elektrische Energieversorgung (12) aufweist, die mit einer Steuereinheit (14) gekoppelt ist, wobei durch die Steuereinheit (14) ein Lichtstrom des Leuchtmittels (10) über eine mit Periodenintervallen aufweisenden Pulsweitenmodulation (15) gesteuert wird, wodurch innerhalb der Periodenintervalle (24) jeweils ein Lichtimpuls (20) zeitlich angeordnet ist, wobei
bestimmte Lichtimpulse (20) durch die Steuereinheit (14) innerhalb des betreffenden Periodenintervalls (24) zeitlich verschoben angeordnet sind, wodurch ein auslesbarer digitaler Datencode erzeugt wird
**dadurch gekennzeichnet, dass**
das Periodenintervall (24) in einem Einschaltintervall (26), in dem ein starker Lichtimpuls (20) liegt, und einem Ausschaltintervall (28), in dem kein oder ein schwacher Lichtimpuls liegt, unterteilt ist, wobei das Einschaltintervall (26) und das Ausschaltintervall (28) durch die Steuereinheit (14) vertauscht oder verschoben werden.

**11.** Verfahren nach einem der vorhergehenden Ansprüche,
**dadurch gekennzeichnet, dass**
von einem Sensor (52), der mit der Steuereinheit (14) verbunden ist, mindestens ein Betriebsparameter, insbesondere ein Stromwert, Spannungswert, Temperaturwert, Betriebszeitwert und/oder dergleichen der Vorrichtung und/oder des Leuchtmittels erfasst wird.

**12.** Verfahren nach einem der vorhergehenden Ansprüche,
**dadurch gekennzeichnet, dass** die Steuereinheit (14) eine zweite Rechnereinheit (54) und eine Speichereinheit aufweist, wobei die Speichereinheit die Betriebsparameter speichern kann, die zur Berechnung der verbleibenden Lebensdauer herangezogen werden.

**13.** Verfahren nach einem der vorhergehenden Ansprüche, welches durch eine Vorrichtung gemäß einem der Ansprüche 1 bis 9 betrieben wird.
